# EUROPÄISCHE PATENTSCHRIFT

(11) **EP 1 563 135 B1**
(45) Veröffentlichungstag und Bekanntmachung des Hinweises auf die Patenterteilung: **20.02.2013**
(21) Anmeldenummer: 03810386.7
(22) Anmeldetag: 08.07.2003
(51) Int. Cl.: D06F 37/00, D06F 37/26

(54) **KUNSTSTOFFBEHÄLTER FÜR HAUSHALTSWASCHMASCHINEN UND VERFAHREN**
PLASTIC RECEPTACLE FOR DOMESTIC WASHING MACHINES AND PROCESS
RECIPIENT EN MATIERE PLASTIQUE POUR MACHINES A LAVER DOMESTIQUES ET PROCÉDÉ

(30) Priorität: 06.11.2002 ES 200202643
(43) Veröffentlichungstag der Anmeldung: 17.08.2005
(73) Patentinhaber: BSH Bosch und Siemens Hausgeräte GmbH, 81739 München (DE)
(72) Erfinder: GRACIA BOBED, Ismael, 50194 Zaragoza (ES); MANAS MOLINA, Alberto, 50009 Zaragoza (ES); GOMEZ CAUDEVILLA, Miguel, Angel, 50007 Zaragoza (ES)
(86) Internationale Anmeldenummer: PCT/EP2003/007345
(87) Internationale Veröffentlichungsnummer: WO 2004/042133

(56) Entgegenhaltungen:
- EP-A- 0 219 115
- US-A- 5 373 715
- US-A- 5 711 170

## Beschreibung

### GEGENSTAND DER ERFINDUNG

Die vorliegende Erfindung betrifft ein Verfahren zum Herstellen eines Kunststoffbehälters für eine Haushaltwaschmaschine, der zum Aufnehmen einer innenliegenden Drehtrommel vorgesehen ist, für deren Achse Lager vorgesehen sind, die in einer Lagerschüssel des Kunststoffbehälters gehalten sind, wobei die Lagerschüssel vor der Spritzung des Rests des Kunststoffbehälters in die für die Lagerung der Drehtrommel erforderlichen Position gebracht wird, und einen Kunststoffbehälter für Haushaltswaschmaschinen, der in bestimmten baulichen und fertigungstechnischen Gesichtspunkten desselben verbessert wurde, um neue Leistungen zu erzielen und bestimmte Probleme zu lösen, die die gegenwärtigen Behälter aufweisen.

Der Gegenstand der Erfindung ist, die Verbindung zwischen der Stahllagerschüssel und dem Kunststoffteil des Behälters zu verbessern, d.h. die physischen Merkmale des Waschmaschinenbehälters und das Spritzverfahren für denselben zu verbessern, um die Bildung von Rissen insbesondere im Bereich in der Nähe des entsprechenden Lagergehäuses oder der Lagerschüssel, die zur Lagerung der Achse der Drehtrommel der Waschmaschine vorgesehen ist, zu verhindern.

### ALLGEMEINER STAND DER TECHNIK

Es ist bekannt, dass Waschmaschinen neben anderen Komponenten einen Behälter umfassen, in dessen Inneren die Drehtrommel, die die Ladung aufnimmt, so angebracht ist, dass die Achse derselben auf Metalllagern gelagert ist, die auf einer Lagerschüssel angeordnet sind, welche zu diesem Zweck in einem Hohlraum des Behälters angeordnet ist.

Es ist außerdem bekannt (EP 0 219 115 A2), dass ein solcher Kunststoffbehälter derart durch Spritzung erhalten wird, dass in der Form der Spritzmaschine zuerst das Lagergehäuse oder die Lagerschüssel angeordnet wird und danach die Spritzung selbst erfolgt.

Dieses Spritzverfahren weist eine Reihe von Problemen und Nachteilen auf, die sich aus Folgendem herleiten:
- Unterschied im Materialkontraktionsindex, da es sich einerseits um Lagerteile aus Metall und andererseits um einen Behälter aus Kunststoff handelt.
- Unterschiedliche Abkühlungskurven, die auch durch die unterschiedliche Beschaffenheit der Materialien verursacht sind.
- Unterschiedliches Massenverhältnis, ebenfalls durch die unterschiedliche Beschaffenheit der Materialien verursacht.

Infolge dieser Unterschiede, die beim Spritzverfahren entstehen, bilden sich Mikrolücken zwischen dem Kunststoff- und Stahlmaterial und dementsprechend eine schlechte Verbindung zwischen den Materialien, die Anlass zu einer Schwächung der Lagerteile oder des Behälters und infolgedessen zur möglichen Bildung von Rissen an den Punkten gibt, an denen sich die Mikrolücken oder Schwächungspunkte ausbilden.

Aus den im Vorhergehenden angeführten Problemen ergibt sich ein weiteres, das darin besteht, dass ein Zwischenraum an der Unterbringung der Manschettendichtung entsteht, wodurch die Bewegung derselben entsteht und eine Leckströmung von Wasser durch das Lagergehäuse oder die Lagerschüssel verursacht wird.

Gegenwärtig wird versucht, diese Problematik mithilfe einer direkten Spritzung des Waschmaschinenbehälters auf die Lagerschüssel zu lösen, obwohl das Spritzverfahren nicht optimal ist, unabhängig davon, dass Beschädigungen bei hoher Motordrehzahl entstehen, da der Behälter weiterhin aus Kunststoff von im Allgemeinen schlechter Qualität ausgebildet ist.

### BESCHREIBUNG DER ERFINDUNG

Der Behälter, der Gegenstand der Erfindung ist, wurde erfunden, um die im Vorstehenden angeführten Probleme und Nachteile mithilfe einer Lösung mit niedrigem Kostenaufwand zu lösen, die die Bildung von Rissen im Behälter verhindert und demselben bessere physische Merkmale verleiht, da eine bessere Verbindung zwischen der Lagerschüssel und dem Kunststoffteil des Behälters erzielt ist.

Konkret umfasst die Erfindung ein Verfahren zum Herstellen eines Kunststoffbehälters für eine Haushaltwaschmaschine nach Anspruch 1.

Ferner betrifft die Erfindung einen Kunststoffbehälter für Haushalts-washmaschinen nach Anspruch 2.

Es wird zumindest ein Körper aus Kunststoff in einem Spritzverfahren auf die Lagerschüssel angewendet, das anders als das Spritzverfahren des Rests des Kunststoffbehälters ist und ermöglicht, dass sich die Baueinheit von Schüssel und Kunststoffteil abkühlt, um eine zweite Spritzung vorzunehmen, ohne die Lagerschüssel zu erhitzen, da die Verbindung, beim Vorliegen unterschiedlicher Ausdehnungskoeffizienten und Temperaturgradienten, mit einer ersten unabhängigen Kunststoffspritzung stärker ist.

Ferner ist das Material von zumindest einem der Kunststoffkörper anders als das Material des Rests des Kunststoffbehälters, und auch das Material von zumindest einem der Kunststoffkörper weist eine größere Festigkeit und Qualität auf als das des Rests des Behälters, da ein Kunststoff von besserer Qualität an diesem kritischen Verbindungspunkt zur Lagerschüssel erforderlich ist, wobei jedoch der Rest des Behälters aus einem billigeren Material bestehen kann, da er nicht derartigen Spannungen standhalten muss.

In einer Ausbildungsform der Erfindung ist der Kunststoffkörper nur auf einem begrenzten Abschnitt der Lagerschüssel auf der Seite zur Drehtrommel als Ring aufgebracht und weist er einerseits mit der Lagerschüssel und andererseits mit dem Rest des Kunststoffbehälters eine formschlüssige Verbindung auf. Bei dieser Ausführungsform der Erfindung kann der Kunststoffkörper den Verbindungsbereichen zum Behälter eine größere Festigkeit verleihen, da dieser durch Spritzguss auf die Baueinheit erhalten wird, die die Lagerschüssel mit ihrer Umhüllung bilden.

Der Kunststoffkörper in Form von Umhüllung ist dazu geeignet, die Gesamtheit der Seitenfläche der Lagerschüssel sowie den Manschettendichtungsansatzbereich derselben zum Erhalt einer vollständigen Verbindung mit der Schüssel zu bedecken.

Bei einer anderen Ausgestaltungsvariante bildet der Kunststoffkörper, der auf die Lagerschüssel gespritzt ist, einen Ring, der den Ansatz der Lagerschüssel sowie den Ansatzbereich und einen Abschnitt der Seitenfläche der Lagerschüssel umhüllt, z. B. dadurch dass der Ring zumindest an der Verbindungsseite zum Rest des Kunststoffbehälters gegen Verdrehen sichernde Formen bzw. Gestaltungen aufweist.

Der Ring kann jegliche veränderliche Ausgestaltung aufweisen, die verschiedene Formen der Verbindung der Lagerschüssel und des Kunststoffbehälters an der Baueinheit ermöglicht.

Mithilfe der angeführten Besonderheiten sind die physischen Merkmale des Behälters und das Spritzverfahren dafür selbst verbessert, wodurch die Mikrolücken zwischen dem Kunststoffmaterial des Behälters und dem Stahlmaterial der Lagerschüssel verringert werden, während gleichzeitig eine Verbesserung der Haftung oder Kohäsion zwischen den Materialien und selbstverständlich eine korrekte thermische Isolierung der Lagerschüssel beim finalen Spritzverfahren des Behälters erzielt wird.

Ebenso ist durch den Einsatz edlerer Materialien eine dimensionale Verbesserung und geringere Abweichung im Bereich der Manschettendichtung der Lagerschüssel erzielt.

Schließlich bleibt zu sagen, dass unter den angeführten Merkmalen die Erhöhung der Verstärkung des Behälterabschnitts, der die größte Belastung aushält, und die dimensionale Verbesserung der Stegstärken erzielt ist.

Kurz gesagt lassen sich die Vorteile, die sich aus dem Kunststoffbehälter für Haushaltswaschmaschinen gemäß dem Gegenstand der Erfindung herleiten, folgendermaßen zusammenfassen:
- Besseres Spritzverfahren.
- Risse im Bereich des Behälters in der Nähe der Unterbringung des Lagerbehälters, auf dem die Achse der Drehtrommel der Waschmaschine lagert, werden verhindert.
- Bessere Halterung der Manschettendichtung.

Der Behälter kann aus einem Kunststoff von geringer Qualität gebaut sein, wie Polypropylen mit Talkum, und einer hohen Drehzahl beim Drehen der Trommel standhalten, und zwar infolge der Tatsache, dass der Kunststoffkörper, der auf die Lagerschüssel gespritzt ist, aus einem härteren, qualitativ besseren Material ist als das Kunststoffmaterial, das den Behälter bildet.

### KURZE BESCHREIBUNG DER ZEICHNUNGEN

Zur Ergänzung der folgenden Beschreibung und um zu einem besseren Verständnis der Merkmale der Erfindung zu verhelfen, liegt der vorliegenden Schrift ein Satz Zeichnungen bei, auf deren Grundlage die Neuerungen und Vorteile des Kunststoffbehälters für Haushaltsaschmaschinen gemäß dem Gegenstand der Erfindung leichter zu verstehen sind. Es zeigen
- Fig. 1: eine Schnittansicht einer Lagerschüssel, die für einen Kunststoffbehälter einer Waschmaschine geeignet ist, wobei die Lagerschüssel den Kunststoffkörper aufnimmt und in diesem Falle eine Umhüllung mit hoher Festigkeit und guter Qualität bildet,
- Fig. 2: eine Schnittansicht der praktischen Anwendung des Gegenstands der Erfindung, wobei die in der vorhergehenden Figur dargestellte Baueinheit mit den Stegen des Kunststoffkörpers zu sehen ist, die eine bessere Kohäsion zwischen den Materialien, die den Behälter bilden, bei ihrer Spritzung auf den Kunststoffkörper ermöglichen, der in diesem Falle durch eine Umhüllung mit den Stegen ausgebildet ist,
- Fig. 3: ein Detail einer Ausführungsvariante, bei der der Kunststoffkörper, der auf die Lagerschüssel gespritzt ist, ein Ring ist, wobei beide Körper eine Baueinheit bilden, auf die der Kunststoffbehälter gespritzt ist,
- Fig.4: eine Längsschnittansicht der Ausgestaltung, bei der der Kunststoffkörper, der als Ring ausgebildet ist, auf dem Ansatz angebracht ist, der durch die Lagerschüssel und den Kunststoffbehälter festgelegt ist, wobei letzterer auf die Baueinheit gespritzt ist, die der Ring und die Lagerschüssel bilden,
- Fig. 5: eine perspektivische Ansicht der Anordnung des Rings, der den Kunststoffkörper bildet, der auf die Lagerschüssel gespritzt ist, und derselben, die auf dem entsprechenden Kunststoffbehälter angeordnet ist, und
- Fig. 6 und 7: jeweils Details in Schnittansicht von zwei Anbringungsweisen des Rings, der den Kunststoffkörper bildet, der auf die Lagerschüssel gespritzt ist.

### BESCHREIBUNG DER BEVORZUGTEN AUSFÜHRUNGSFORM

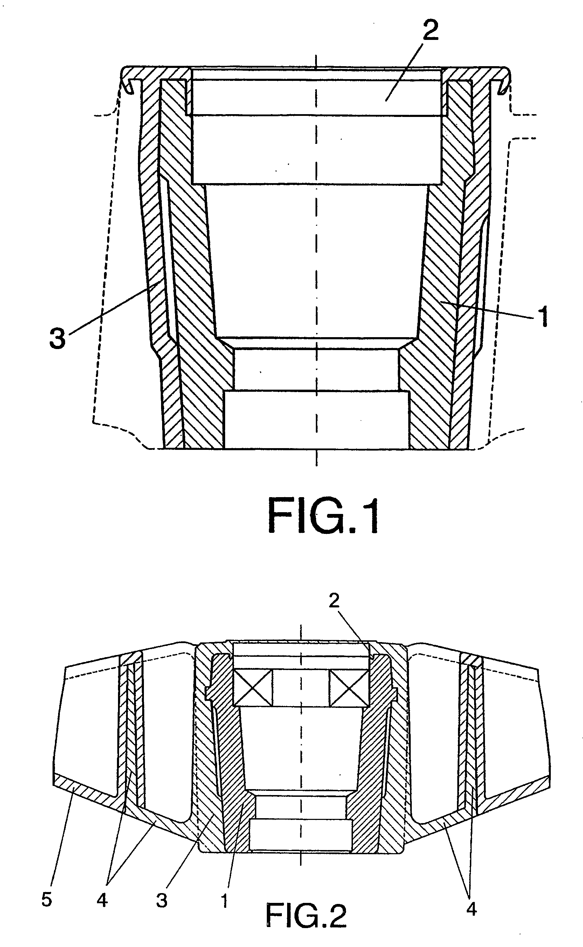

In den angeführten Figuren 1 und 2 ist eine Lagerschüssel 1 zu sehen, die wie herkömmlich aus Stahl ist und mit dem Manschettendichtungsbereich 2 versehen ist, wobei auf die Lagerschüssel 1 ein Kunststoffkörper 3 gespritzt ist, der bei der Ausführungsform, die in Figur 1 und 2 dargestellt ist, eine Einlage oder Umhüllung bildet, die die Gesamtheit der Seitenfläche der Lagerschüssel 1 bedeckt, einschließlich des Ansatzes derselben und eines Innenabschnitts des Bereichs des Ansatzes 2.

Der Kunststoffkörper 3 ist mit Verstärkungsrippen 4 oder -stegen versehen, die einen Bestandteil der Außenfläche der Umhüllung bilden, die den Kunststoffkörper 3 bildet, wie in Figur 2 dargestellt, damit das Kunststoffmaterial, das den entsprechenden Behälter 5 bildet, bei seiner Spritzung eine größere Kohäsion oder Haftung mit dem Körper 3 annimmt, wobei außerdem in diesem Bereich des Behälters 5 eine größere Verstärkung vorgesehen ist, der sich logischerweise in der Nähe der Lagerschüssel 1 befindet, wo der Behälter die größte Belastung aushält.

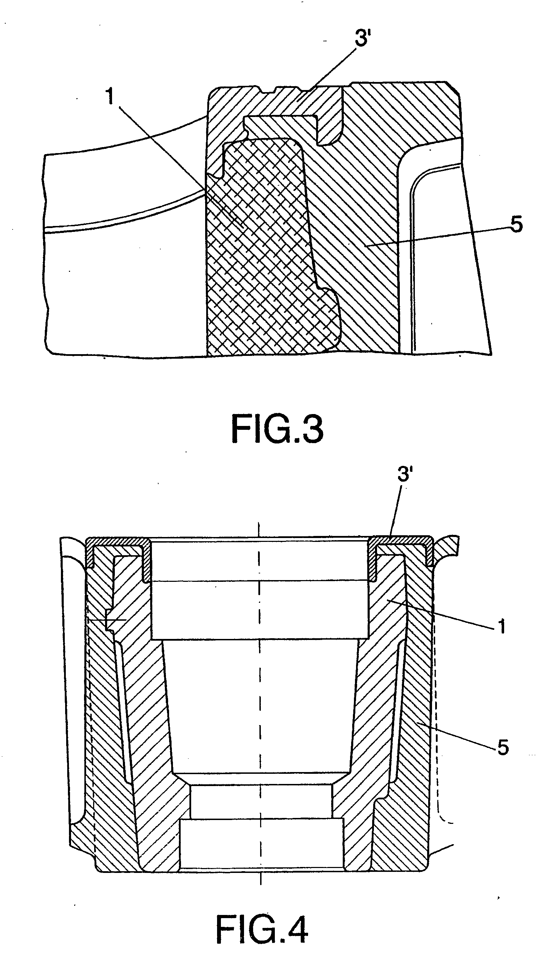

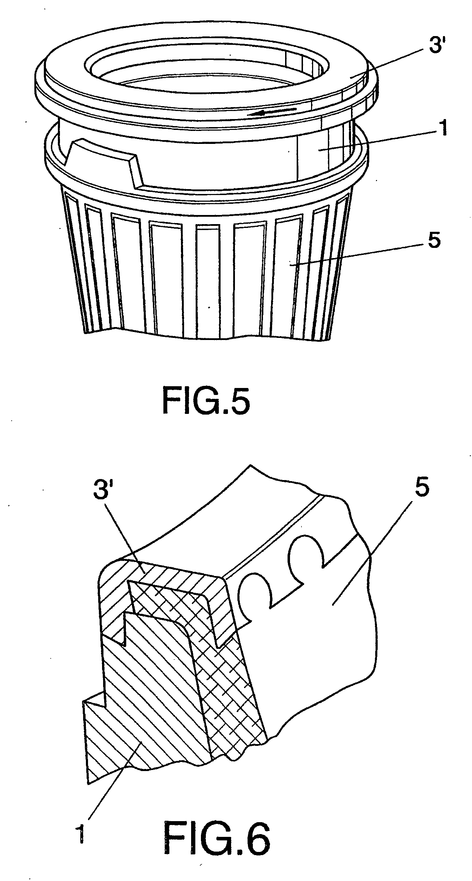

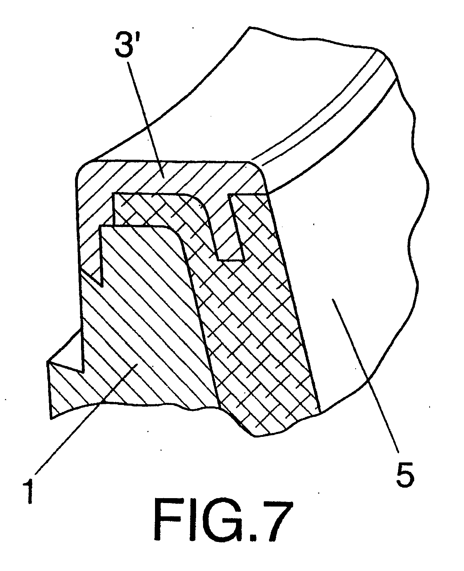

Bei einer Ausführungsvariante kann der Kunststoffkörper 3 durch einen einfachen Ring 3' mit unterschiedlichen Formen und Gestaltungen ausgebildet sein, wie in Figur 3, 4, 5, 6 und 7 dargestellt, da der Kunststoffkörper, ob er nun eine Umhüllung 3 ausbildet, wie in Figur 1 und 2 dargestellt, oder ob er einen Ring 3' ausbildet, jegliche Form oder Gestaltung aufweisen kann, da von Bedeutung ist, dass der Kunststoffkörper 3 oder 3' mit der Lagerschüssel 1 gespritzt ist und der Kunststoffbehälter 5 auf die Baueinheit, die durch beide Körper gebildet ist, gespritzt ist.

Schließlich bleibt zu sagen, dass der Kunststoffkörper 3 oder 3', der auf die Lagerschüssel 1 gespritzt ist, von größerer Festigkeit und besserer Qualität ist als der Kunststoff, der den Behälter 5 bildet, sodass der Körper 3 oder 3', der in Zuordnung zum kritischsten Bereich des Behälters 5 gespritzt ist, dadurch eine größere Festigkeit in diesem Bereich vorsieht und deswegen Risse verhindert werden, die mit großer Häufigkeit bei den herkömmlichen Kunststoffbehältern auftreten, da das Material derselben von geringerer Qualität ist.

## Patentansprüche

1. Verfahren zum Herstellen eines Kunststoffbehälters (5) für eine Haushaltwaschmaschine, der zum Aufnehmen einer innenliegenden Drehtrommel vorgesehen ist, für deren Achse Lager vorgesehen sind, die in einer Lagerschüssel (1) aus metallichen Material des Kunststoffbehälters (5) gehalten sind, wobei die Lagerschüssel (1) auf zumindest einem Abschnitt ihrer Außenfläche in einem separaten Spritzgussverfahren vor der Spritzung des Rest des Kunststoffbehälters (5) mit einem Kunststoffkörper (3, 3'), der eine Umhüllung für die Lagerschüssel (1) bildet und dessen Material sich vom Material des Rests des Kunststoffbehälters (5) durch größere Festigkeit und Qualität unterscheidet, umspritzt wird und über Verstärkungsrippen (4) oder -stege, die einen Bestandteil der Außenfläche des Kunststoffkörpers (3) bilden, mit dem Rest des Kunststoffbehälters (5) eine formschlüssige Verbindung herstellt, welcher in einem weiteren Spritzguss verfahren um den kunststoffkörper (3,3') gespritzt wird.

2. Kunststoffbehälter (5) für Haushaltwaschmaschinen hergestellt nach dem Verfahren gemäß Anspruch 1, der zum Aufnehmen einer innenliegenden Drehtrommel vorgesehen ist, für deren Achse Lager vorgesehen sind, die in einer Lagerschüssel (1) aus metallischem Material des Kunststoffbehälters (5) gehalten sind, wobei die Lagerschüssel (1) auf zumindest einem Abschnitt ihrer Außenfläche in einem separaten Spritzgussverfahren vor der Spritzung des Rests des Kunststoffbehälters (5) mit einem Kunststoffkörper (3, 3'), der eine Umhüllung für die Lagerschüssel (1) bildet und dessen Material sich vom Material des Rests des Kunststoffbehälters (5) durch größere Festigkeit und Qualität unterscheidet, umspritzt ist wobei der Kunststoffkörper über Verstärkungsrippen (4) oder -stege, die einen Bestandteil der Außenfläche des Kunststoffkörpers (3, 3') bilden, mit dem Rest des Kunststoffbehälters (5) formschlüssig verbunden ist, welcher um den Kunststoffkörper gespritzt ist.

3. Kunststoffbehälter für Haushaltswaschmaschinen nach Anspruch 2, **dadurch gekennzeichnet, dass** die Umhüllung , die der Kunststoffkörper (3) bildet, die Gesamtheit der Seitenfläche der Lagerschüssel (1) sowie den Ansatz und Manschettendichtungsbereich (2) derselben bedeckt.

4. Kunststoffbehälter für Haushaltswaschmaschinen nach Anspruch 2, **dadurch gekennzeichnet, dass** der Kunststoffkörper, der in der Lagerschüssel (1) aufgenommen ist, ein Ring (3') ist, der den Ansatz der Lagerschüssel (1) sowie den Manschettendichtungsbereich (2) und einen Abschnitt der Seitenfläche der Lagerschüssel (1) umhüllt.

5. Kunststoffbehälter für Haushaltswaschmaschinen nach Anspruch 4, **dadurch gekennzeichnet, dass** der Ring (3'), der den Kunststoffkörper bildet, der auf die Lagerschüssel (1) gespritzt ist, eine veränderliche Ausgestaltung aufweist, die verschiedene Verbindungsformen an der Baueinheit, die die Lagerschüssel (1) und der Kunststoffbehälter (5) bilden, ermöglicht.

## Claims

1. Method of producing a plastics material container (5) for a domestic washing machine, which container is provided for receiving an internally disposed rotary drum, for the axle of which bearings retained in a bearing bowl (1) of metallic material of the plastics material container (5) are provided, wherein the bearing bowl (1) on at least one section of its outer surface is injection-moulded around in a separate injection-moulding process, prior to injection-moulding of the rest of the plastics material container (5), by a plastics material body (3, 3'), which forms an enclosure for the bearing bowl (1) and the material of which differs from the rest of the plastics material container (5) by greater strength and quality, and produces a mechanically positive connection with the rest of the plastics material container (5) by way of reinforcing ribs (4) or reinforcing webs which form a component of the outer surface of the plastics material body (3), which container is injection-moulded in a further injection-moulding method around the plastics material body (3, 3').

2. Plastics material container (5) for domestic washing machines produced in accordance with the method according to claim 1, which container is provided for receiving an internally disposed rotary drum, for the axle of which bearings retained in a bearing bowl (1) of metallic material of the plastics material container (5) are provided, wherein the bearing bowl (1) on at least one section of its outer surface is injection-moulded around in a separate injection-moulding process, prior to injection-moulding of the rest of the plastics material container (5), by a plastics material body (3, 3'), which forms an enclosure for the bearing bowl (1) and the material of which differs from the rest of the plastics material container (5) by greater strength and quality, wherein the plastics material body is mechanically positively connected with the rest of the plastics material container (5) by way of reinforcing ribs (4) or reinforcing webs which form a component of the outer surface of the plastics material body (3), which container is injection-moulded around the plastics material body.

3. Plastics material container for domestic washing machines according to claim 2, **characterised in that** the enclosure forming the plastics material body (3) covers the entirety of the side surface of the bearing bowl (1) as well as the shoulder and sleeve sealing region (2) of the same.

4. Plastics material container for domestic washing machines according to claim 2, **characterised in that** the plastics material body received in the bearing bowl (1) is a ring (3'), which encloses the shoulder of the bearing bowl (1) as well as the sleeve sealing region (2) and a section of the side surface of the bearing bowl (1).

5. Plastics material container for domestic washing machines according to claim 4, **characterised in that** the ring (3') forming the plastics material body which is injection-moulded onto the bearing bowl (1) has a variable design enabling different forms of connection with the constructional unit forming the bearing bowl (1) and the plastics material container (5).

## Revendications

1. Procédé de fabrication d'un récipient en matière plastique (5) pour un lave-linge à usage domestique, lequel récipient est ménagé pour loger un tambour rotatif intérieur, pour l'axe duquel tambour des paliers sont ménagés, qui sont maintenus dans un coussinet de palier (1) en matière métallique du récipient en matière plastique (5), le coussinet de palier (1) étant injecté par surmoulage sur au moins une section de sa surface extérieure dans un procédé de moulage par injection séparé, avant l'injection du reste du récipient en matière plastique (5), à l'aide d'un corps en matière plastique (3, 3') qui forme une enveloppe pour le coussinet de palier (1) et dont le matériau se distingue du matériau du reste du récipient en matière plastique (5) par une dureté et une qualité plus grandes, et établissant une liaison à adhérence de forme avec le reste du récipient en matière plastique (5) par l'intermédiaire de nervures ou d'entretoises de renforcement (4) qui forment une partie constituante de la surface extérieure du corps en matière plastique (3), lequel récipient est moulé par injection autour du corps en matière plastique (3, 3') dans un procédé d'injection supplémentaire.

2. Récipient en matière plastique (5) pour des lave-linge à usage domestique fabriqué selon le procédé conformément à la revendication 1, lequel récipient est ménagé pour loger un tambour rotatif intérieur, pour l'axe duquel tambour des paliers sont ménagés, qui sont maintenus dans un coussinet de palier (1) en matière métallique du récipient en matière plastique (5), le coussinet de palier (1) étant injecté par surmoulage sur au moins une section de sa surface extérieure dans un procédé de moulage par injection séparé, avant l'injection du reste du récipient en matière plastique (5), à l'aide d'un corps en matière plastique (3, 3') qui forme une enveloppe pour le coussinet de palier (1) et dont le matériau se distingue du matériau du reste du récipient en matière plastique (5) par une dureté et une qualité plus grandes, le corps en matière plastique étant relié par adhérence de forme au reste du récipient en matière plastique (5) par l'intermédiaire de nervures ou d'entretoises de renforcement (4) qui forment une partie constituante de la surface extérieure du corps en matière plastique (3), lequel récipient est moulé par injection autour du corps en matière plastique (3, 3').

3. Récipient en matière plastique pour lave-linge à usage domestique selon la revendication 2, **caractérisé en ce que** l'enveloppe que le corps en matière plastique (3) forme recouvre la totalité de la surface latérale du coussinet de palier (1) ainsi que l'embase et la zone de la manchette du coussinet de palier.

4. Récipient en matière plastique pour lave-linge à usage domestique selon la revendication 2, **caractérisé en ce que** le corps en matière plastique, qui est logé dans le coussinet de palier (1), est un anneau (3') qui entoure l'embase du coussinet de palier (1) ainsi que la zone de la manchette (2) et une section de la surface latérale du coussinet de palier (1).

5. Récipient en matière plastique pour lave-linge à usage domestique selon la revendication 4, **caractérisé en ce que** l'anneau (3') qui forme le corps en matière plastique, qui est moulé par injection sur le coussinet de palier (1), présente une conception modifiable qui permet des formes de liaison différentes sur l'unité formant le coussinet de palier (1) et le récipient en matière plastique (5).
